# EUROPEAN PATENT SPECIFICATION

(11) **EP 4 527 716 B1**
(45) Date of publication and mention of the grant of the patent: **18.02.2026**
(21) Application number: 24199934.1
(22) Date of filing: 12.09.2024
(51) Int. Cl.: B62B 5/00, B62B 5/06

(54) **OPERATION DEVICE**
BETRIEBSVORRICHTUNG
DISPOSITIF D'ACTIONNEMENT

(30) Priority: 19.09.2023 JP 2023150828
(43) Date of publication of application: 26.03.2025
(73) Proprietor: HONDA MOTOR CO., LTD., Tokyo 105-8404 (JP)
(72) Inventor: INADA, Jun, Saitama, 351-0193 (JP); OSHIMA, Ritsuya, Saitama, 351-0193 (JP); IWAKAMI, Hiroshi, Saitama, 351-0193 (JP); UCHIDA, Shintaro, Saitama, 351-0193 (JP); OHASHI, Nobuyuki, Saitama, 351-0193 (JP); IIMURA, Taiki, Saitama, 351-0193 (JP)
(74) Representative: Weickmann & Weickmann PartmbB

(56) References cited:
- EP-A1- 4 067 205
- KR-B1- 102 032 373
- US-A1- 2021 229 723

## Description

### TECHNICAL FIELD

The present invention relates to an operation device, and particularly relates to an operation device for receiving an operation input to a moving body configured to undergo translational movement and/or turn on a horizontal plane.

### BACKGROUND ART

In a factory or the like, a cart is used as a moving body for transporting heavy goods. When transporting goods by using a cart, particularly when starting the transportation, it is necessary for the user to apply a large driving force to the cart and push out the cart. Therefore, such a transportation work is a big burden for the user.

To reduce the burden of transportation work, JP2014-189073A discloses an assist unit configured to assist the driving force to be applied to the cart (also called a truck) by the user.

This assist unit includes a unit body connected to the cart, an operation handle provided on the unit body, and a sensor for detecting the operation force inputted from the operation handle. Further, the unit body is provided with a pair of left and right driving wheels and an electric motor for applying an assist force to the driving wheels.

The operation handle is disposed above the unit body and has a rod shape extending horizontally in the left-right direction. The operation handle is connected to the unit body via two plate members laterally spaced from each other. When the user pushes the operation handle, the operation force inputted from the operation handle is detected by the sensor, and an assist force according to the detected operation force is applied from the electric motor to the driving wheels.

A moving body, such as a cart, is placed on a horizontal plane, and the user performs operation input to cause the moving body to move forward, rearward, leftward, or rightward or to rotate about a vertical axis on the horizontal plane. In the assist unit of JP2014-189073A, when the user pushes the operation handle forward to move the moving body forward, the connection part between each plate member and the unit body is bent. As a result, the operation handle rotates about the connection part between the plate member and the unit body as seen in side view, and accordingly, the operation handle may be displaced in a direction different from the moving direction of the moving body intended by the user, and the user operating the moving body may feel discomfort.

Other examples of devices for receiving an operation input are described in US 2021/229723 A1, KR 102032373 B1 and EP 4067205 A1.

### SUMMARY OF THE INVENTION

In view of the foregoing background, a primary object of the present invention is to provide an operation device, with which an operation input suitable for a moving body configured to move on a horizontal plane can be performed.

To achieve the above object, one aspect of the present invention provides an operation device (5) for receiving an operation input regarding translation and/or turning about a vertical axis of a moving body (1) from a user operating the moving body, the operation device comprising: at least three leg parts (58) extending upward from a vehicle body (2); an operation part (51) joined to each of the leg parts and configured to receive an operation input from the user; and at least one displacement sensor (64) configured to detect a horizontal displacement amount of the operation part, wherein, as seen in top view, each of the leg parts is in a position spaced from a straight line connecting selected two of other leg parts.

According to this aspect, the leg part that is in a position apart from a straight line connecting the two leg parts acts to resist the moment about a horizontal axis that may occur on the operation part. Thereby, the rotational motion of the operation part about the horizontal axis when there is an operation input is reduced, and thus, it is possible to provide an operation device, with which an operation input suitable for a moving body configured to move on a horizontal plane can be performed.

Preferably, the at least three leg parts include four leg parts disposed at vertices of a rectangle as seen in top view.

According to this aspect, the operation part can be stably supported on the vehicle body.

Preferably, each of the leg parts has a round rod shape.

According to this aspect, even when the operation part may be moved in any horizontal direction, the leg parts can be bent uniformly in any direction.

Preferably, the at least three leg parts include three leg parts disposed at vertices of a triangle as seen in top view.

According to this aspect, the operation part can be supported on the vehicle body with a simple configuration.

Preferably, the three leg parts consist of two leg parts (58R) disposed to be laterally spaced from each other and one leg part (58F) disposed in front of the two leg parts.

According to this aspect, the operation part can be supported on the vehicle body with a simple configuration.

Preferably, the one leg part disposed in front of the two leg parts is disposed between the two leg parts as seen in a front-rear direction.

According to this aspect, the lateral width of the part where the leg parts are provided can be reduced compared to the case where the leg part disposed in front of the two leg parts is provided outside the two leg parts as seen in the front-rear direction.

Preferably, each of the leg parts has a round rod shape.

According to this aspect, even when the operation part may be moved in any horizontal direction, the leg parts can be bent uniformly in any direction.

Preferably, the at least one displacement sensor includes two displacement sensors, each of the two displacement sensors being configured to detect a horizontal displacement amount of a corresponding one of laterally spaced positions of the operation part.

According to this aspect, the operation input of the user for turning the moving body can be detected properly.

Preferably, the operation device comprises two restricting members (60) supported on the vehicle body and provided with respective through holes (62) for allowing left and right end portions of the operation part to pass therethrough in a left-right direction.

According to this aspect, the movement range of the operation part in the front-rear direction is limited, and thus, it is possible to prevent an excessive load from being applied to the connection part.

According to the foregoing configuration, it is possible to provide an operation device, with which an operation input suitable for a moving body configured to move on a horizontal plane can be performed.

### BRIEF DESCRIPTION OF THE DRAWINGS

Figure 1 is a perspective view of a moving body provided with an operation device according to the first embodiment;
Figure 2 is a plan view of the moving body;
Figure 3 is a sectional view of an omnidirectional wheel;
Figure 4 is a side view of a main wheel;
Figure 5 is an explanatory diagram of left and right omnidirectional wheels;
Figure 6 is a perspective view of the operation device according to the first embodiment;
Figure 7 is a top view of the operation device according to the first embodiment;
Figure 8 shows a modification of the operation device according to the first embodiment;
Figure 9A is a schematic diagram showing the operation device according to the first embodiment as seen from a side when a forward load is input;
Figure 9B is a schematic diagram showing a modification of the operation device, in which the lever and the vehicle body are connected by a pair of left and right leg parts, as seen from a side when a forward load is input;
Figure 10 is a perspective view of an operation device according to the second embodiment;
Figure 11 is a top view of the operation device according to the second embodiment; and
Figure 12 shows a modification of the operation device according to the second embodiment.

### DETAILED DESCRIPTION OF THE INVENTION

In the following, with reference to the drawings, an example in which an operation device according to the present invention is applied to a moving body capable of translational movement in the front-rear and left-right directions and capable of turning will be described. In the present embodiment, the moving body functions as a cart. In the following, the directions are defined with respect to the moving body.

### First Embodiment

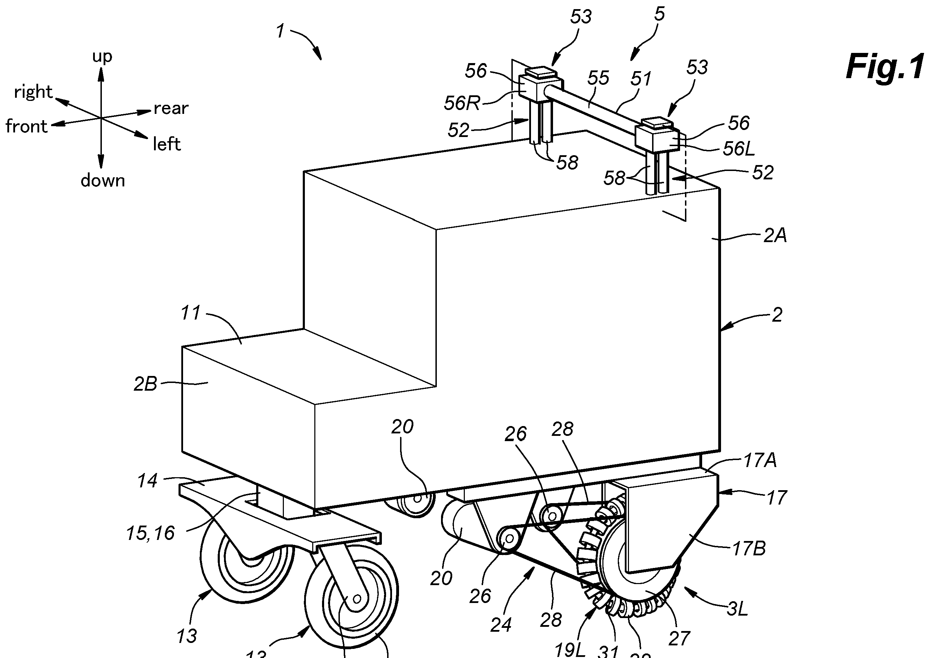

As shown in Figure 1, a moving body 1 includes a vehicle body 2 and a pair of left and right omnidirectional wheels 3 provided on the vehicle body 2 for moving the vehicle body 2 in all directions along the floor surface.

The moving body 1 further includes an operation device 5 for receiving the operation input of the user and a control device 7 for controlling each omnidirectional wheel 3 based on the operation input received by the operation device 5.

The vehicle body 2 extends in the front-rear direction. A rear portion 2A of the vehicle body 2 extends upward higher than a front portion 2B. The front portion 2B of the vehicle body 2 is provided with a support base 11 for supporting another device. The device supported on the support base 11 may include inspection equipment such as an X-ray scanner, for example. The device is preferably fastened to the support base 11. Inside the rear portion 2A of the vehicle body 2, the control device 7 is provided together with a battery and various sensors.

In the present embodiment, the pair of omnidirectional wheels 3 is provided under the rear portion 2A of the vehicle body 2. Also, left and right casters 13 are supported under the front portion 2B of the vehicle body 2 via a suspension. The suspension includes an arm 14 disposed below the vehicle body 2 and extending laterally, and a spring 15 and a shock absorber 16 disposed between the vehicle body 2 and the arm 14. The casters 13 are disposed below the left end and the right end of the arm 14. Each caster 13 includes a fork 13A joined to the arm 14 to be rotatable about an axis extending vertically, and a wheel 13B supported by the fork 13A to be rotatable about an axis extending in the horizontal direction. The fork 13A rotates freely relative to the arm 14, and the wheel 13B rotates freely relative to the fork 13A.

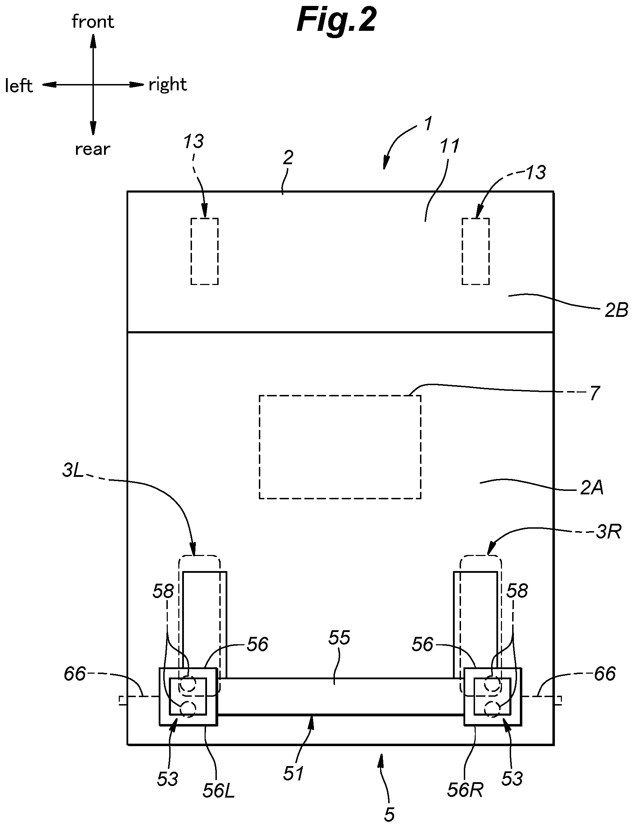

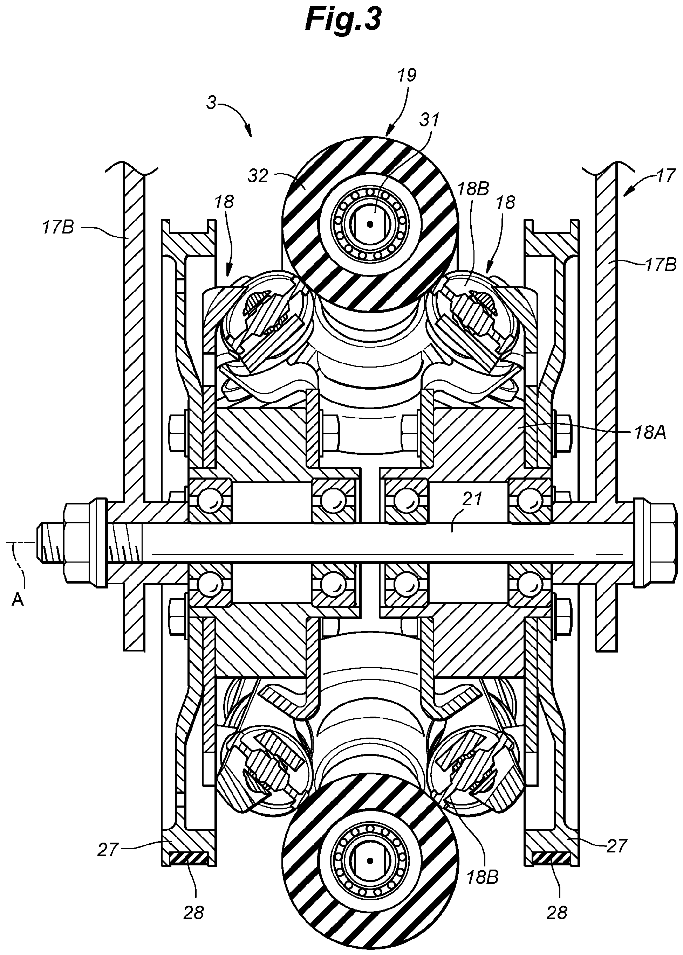

As shown in Figure 2, the left and right omnidirectional wheels 3 are disposed to be laterally spaced from each other. The position and direction of each omnidirectional wheel 3 are fixed relative to the vehicle body 2. In the present embodiment, the two omnidirectional wheels 3 are disposed under the left and right parts of the rear portion 2A of the vehicle body 2. As shown in Figure 3, each omnidirectional wheel 3 includes a frame 17, a pair of drive disks 18 rotatably supported by the frame 17, an annular main wheel 19 disposed between the drive disks 18, and a pair of electric motors 20 for rotating the respective drive disks 18.

As shown in Figures 1 and 3, the frame 17 includes a frame upper portion 17A joined to the lower portion of the vehicle body 2, and a pair of frame side portions 17B respectively extending downward from the left and right ends of the frame upper portion 17A. A support shaft 21 extends laterally between the lower ends of the frame side portions 17B. Each of the drive disks 18 is rotatably supported on the support shaft 21. The pair of drive disks 18 and the support shaft 21 are disposed coaxially. The axis of the pair of drive disks 18 constitutes the rotation axis A of the omnidirectional wheel 3. The position of each drive disk 18 in the left-right direction is restricted with respect to the support shaft 21. The drive disks 18 are laterally spaced from each other and oppose each other.

The drive disks 18 are disposed on both sides of the annular main wheel 19 and apply frictional force to the main wheel 19 to rotate the main wheel 19 about a central axis and an annular axis. Each drive disk 18 includes a disk-shaped base 18A rotatably supported by the frame 17 and multiple drive rollers 18B rotatably supported on the outer periphery of the base 18A while being inclined with respect to each other and in contact with the main wheel 19. The base 18A is disposed coaxially with the support shaft 21.

The drive disks 18 which oppose each other are formed in a bilaterally symmetrical shape. Namely, the position and direction of the multiple drive rollers 18B of the left drive disk 18 and the position and direction of the multiple drive rollers 18B of the right drive disk 18 are bilaterally symmetrical.

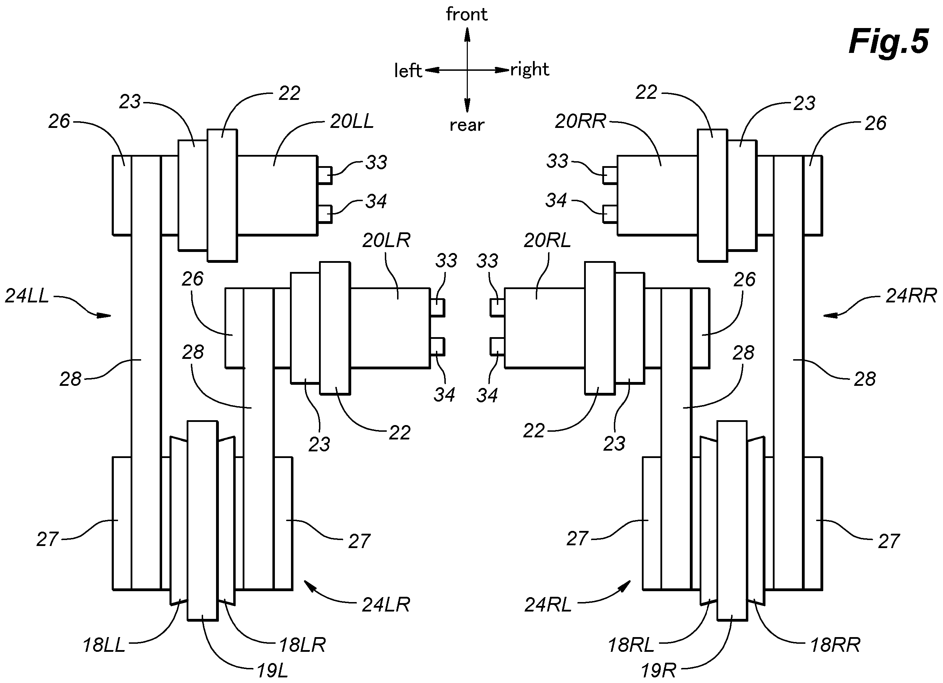

As shown in Figure 5, each drive disk 18 is connected to a corresponding electric motor 20 via an electromagnetic brake 22, a speed reducer 23, and a transmission mechanism 24. The transmission mechanism 24 transmits the rotational force of the electric motor 20 to the corresponding drive disk 18. Each transmission mechanism 24 includes a drive pulley 26 joined to the output shaft of the corresponding speed reducer 23, a driven pulley 27 joined to the corresponding drive disk 18, and a belt 28 wound between the drive pulley 26 and the driven pulley 27. The driven pulley 27 is provided coaxially with the drive disk 18. The pair of electric motors 20 are provided under the vehicle body 2. With the electric motors 20 rotating independently from each other, the drive disks 18 rotate independently from each other.

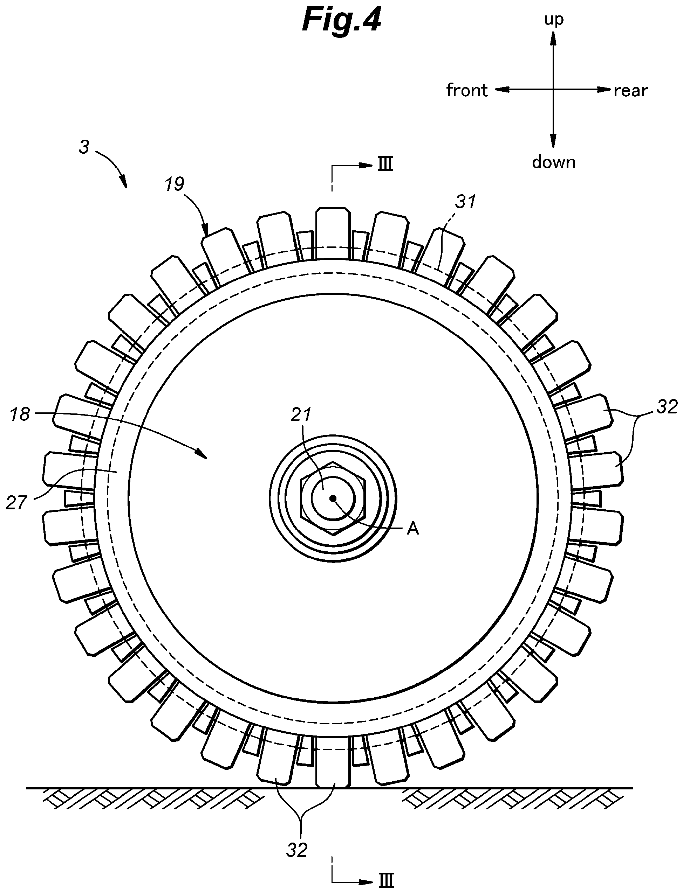

As shown in Figure 4, the main wheel 19 has an annular shape, is disposed between the drive disks 18 to be coaxial with the drive disks 18, is in contact with the multiple drive rollers 18B, and is rotatable about the central axis and the annular axis. The main wheel 19 includes an annular core 31 and multiple driven rollers 32 rotatably supported by the core 31. The multiple driven rollers 32 are arranged at equal intervals in the circumferential direction of the core 31. Each driven roller 32 is supported by the core 31 to be rotatable about an axis (annular axis) of the annular core 31. Each driven roller 32 can rotate about a tangent line on the core 31 at its respective position relative to the core 31. Each driven roller 32 rotates with respect to the core 31 upon receiving an external force.

The main wheel 19 is disposed along the outer periphery of the pair of drive disks 18 and is in contact with the multiple drive rollers 18B provided on each drive disk 18. The drive rollers 18B of the left and right drive disks 18 contact the inner periphery of the main wheel 19 and sandwich the main wheel 19 from left and right sides. Further, the drive rollers 18B of the left and right drive disks 18 restrict the radial displacement of the main wheel 19 about the rotation axis A by contacting the inner periphery of the main wheel 19. In this way, the main wheel 19 is supported by the left and right drive disks 18, and the central axis of the main wheel 19 (core 31) is disposed coaxially with the rotation axis A. The main wheel 19 contacts the multiple drive rollers 18B of the left and right drive disks 18 at the multiple driven rollers 32.

The main wheel 19 contacts the ground under the rotation axis A. Namely, in plan view, the ground contact point of the omnidirectional wheel 3 is positioned on the rotation axis A. The main wheel 19 is disposed on a plane perpendicular to the rotation axis A.

As shown in Figure 5, the left and right omnidirectional wheels 3 have the same configuration. The left omnidirectional wheel 3 may be denoted by a reference numeral with a suffix L, namely, 3L. Also, the right omnidirectional wheel 3 may be denoted by a reference numeral with a suffix R, namely, 3R. Also, in the left omnidirectional wheel 3L, the left element of a pair of left and right elements is denoted by a reference numeral with a suffix LL, and the right element of the pair is denoted by a reference numeral with a suffix LR. Similarly, in the right omnidirectional wheel 3R, the left element of a pair of left and right elements is denoted by a reference numeral with a suffix RL, and the right element of the pair is denoted by a reference numeral with a suffix RR. For example, as shown in Figure 5, the left omnidirectional wheel 3L includes the left electric motor 20LL, the right electric motor 20LR, the left transmission mechanism 24LL, the right transmission mechanism 24LR, the left drive disk 18LL, the right drive disk 18LR, and the main wheel 19L. Similarly, the right omnidirectional wheel 3R includes the left electric motor 20RL, the right electric motor 20RR, the left transmission mechanism 24RL, the right transmission mechanism 24RR, the left drive disk 18RL, the right drive disk 18RR, and the main wheel 19R.

The left drive disk 18LL of the left omnidirectional wheel 3L and the left drive disk 18RL of the right omnidirectional wheel 3R have the same shape. The right drive disk 18LR of the left omnidirectional wheel 3L and the right drive disk 18RR of the right omnidirectional wheel 3R have the same shape.

Each electric motor 20 is provided with an electric current sensor 33 (33LL, 33LR, 33RL, 33RR) for detecting the electric current flowing through the electric motor 20. Each electric motor 20 is provided with an angular velocity sensor 34 (34LL, 34LR, 34RL, 34RR) for detecting the angular velocity of the electric motor 20.

In each omnidirectional wheel 3, when the two drive disks 18 rotate in the same direction at the same rotation speed, the main wheel 19 rotates together with the two drive disks 18. That is, the main wheel 19 rotates forward or backward about its own axis which coincides with the rotation axis A. At this time, the drive rollers 18B of each drive disk 18 and the driven rollers 32 of the main wheel 19 do not rotate with respect to the core 31. In each omnidirectional wheel 3, when a rotation speed difference occurs between the two drive disks 18, a force component perpendicular to the force in the circumferential (tangential) direction caused by the rotation of the two drive disks 18 acts on the driven rollers 32 of the main wheel 19 from the left and right drive rollers 18B. Such a force component is generated due to the rotation speed difference between the drive disks 18 because the axis of each drive roller 18B is inclined with respect to the circumferential direction of the associated drive disk 18. This force component causes the drive rollers 18B to rotate relative to the base 18A and the driven rollers 32 to rotate relative to the core 31. In this way, the main wheel 19 generates a driving force in the left-right direction.

In each omnidirectional wheel 3, when the right drive disk 18 rotates forward and the left drive disk 18 rotates backward (in reverse), the driven rollers 32 contacting the ground rotate rightward, and a rightward driving force component occurs. Here, when the drive disk 18 is seen from the right, the forward rotation is a clockwise rotation and the backward rotation is a counterclockwise rotation. At this time, if the angular velocity (rotation speed) of the right drive disk 18 is less than the angular velocity of the left drive disk 18, the main wheel 19 rotates backward, and a backward driving force component occurs. On the other hand, if the angular velocity of the right drive disk 18 is greater than the angular velocity of the left drive disk 18, the main wheel 19 rotates forward, and a forward driving force component occurs.

In each omnidirectional wheel 3, When the right drive disk 18 rotates backward and the left drive disk 18 rotates forward, driven rollers 32 contacting the ground rotate leftward, and a leftward driving force component occurs. At this time, if the angular velocity (rotation speed) of the right drive disk 18 is less than the angular velocity of the left drive disk 18, the main wheel 19 rotates forward, and a forward driving force component occurs. On the other hand, if the angular velocity of the right drive disk 18 is greater than the angular velocity of the left drive disk 18, the main wheel 19 rotates backward, and a backward driving force component occurs.

When the right drive disk 18LR of the left omnidirectional wheel 3L rotates forward and the left drive disk 18LL of the same rotates backward at an angular velocity greater than that of the drive disk 18LR and the right drive disk 18RR of the right omnidirectional wheel 3R rotates forward and the left drive disk 18RL of the same rotates backward at an angular velocity less than that of the drive disk 18RR, the moving body 1 turns left while drifting rightward.

When the left and right omnidirectional wheels 3 rotate forward at the same speed, the moving body 1 moves forward. When the left and right omnidirectional wheels 3 rotate backward at the same speed, the moving body 1 moves backward. When a speed difference occurs between the rotations of the left and right omnidirectional wheels 3 in the front-rear direction, the moving body 1 turns right or left. With rotation of the driven rollers 32 of the main wheel 19 of each of the left and right omnidirectional wheels 3, the moving body 1 can undergo a translational movement rightward or leftward.

As shown in Figure 1, the operation device 5 is provided on the rear portion 2A of the vehicle body 2. The operation device 5 receives an operation input for moving (displacing) the moving body 1 from a user (also called an operator) operating the moving body 1. The operation input received by the operation device 5 may include an operation input for causing the moving body 1 to translate in a horizontal direction and/or an operation input for causing the moving body 1 to turn about a vertical axis (also called an up-down axis or a yaw axis). The operation device 5 outputs the operation input received from the user to the control device 7 (see Figure 2).

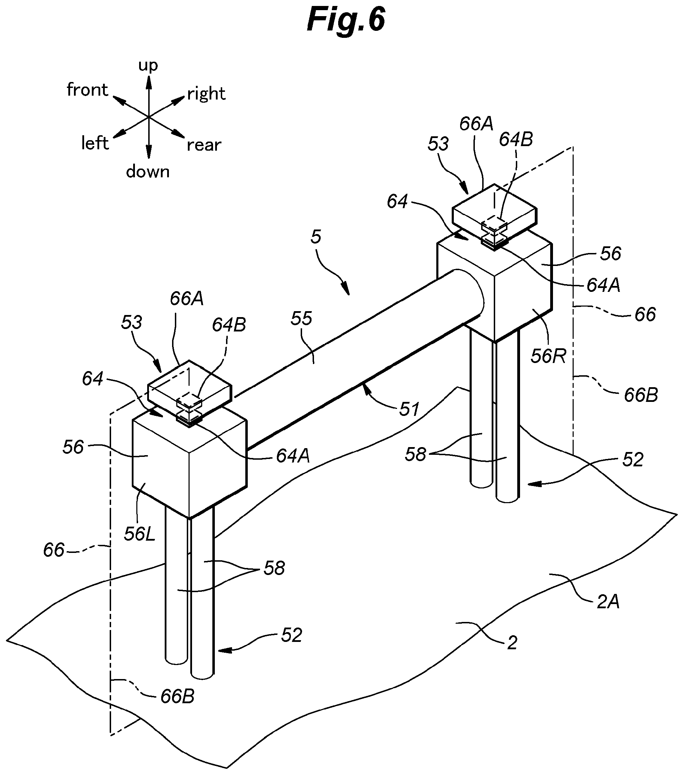

As shown in Figures 1 and 6, the operation device 5 includes a handle 51 as an operation part to be grasped by the user for performing operation input, one or more connection parts 52 for connecting the handle 51 to the vehicle body 2, and detection units 53 for detecting a displacement of the handle 51.

As shown in Figure 6, the handle 51 is a rod-shaped member and is disposed to extend in the left-right direction. In the present embodiment, the handle 51 includes a round rod-shaped grip 55 extending in the left-right direction and a pair of left and right block parts 56 provided at both ends of the grip 55. Each of the block parts 56 has a rectangular parallelepiped shape and is disposed such that the side surfaces thereof face forward, rearward, upward, downward, leftward, and rightward. The grip 55 connects the mutually opposing left and right side surfaces of the block parts 56. In the following, the block part 56 disposed on the left side may be referred to as the left block part 56L and the block part 56 disposed on the right side may be referred to as the right block part 56R, as necessary.

The connection parts 52 extend vertically and connect the block parts 56 of the handle 51 (operation part) to the vehicle body 2 of the moving body 1. In the present embodiment, the handle 51 is provided with two left and right block parts 56, and accordingly, the operation device 5 is provided with two left and right connection parts 52.

Each connection part 52 includes two leg parts 58. Since the operation device 5 is provided with two left and right connection parts 52, the operation device 5 includes four leg parts 58 in total.

Each leg part 58 is composed of a round rod having a circular cross section. Each leg part 58 extends in the up-down direction, is connected to the handle 51 at the upper end thereof, and is connected to the vehicle body 2 at the lower end thereof.

Note, however, that the shape of the cross section of each leg part 58 is not limited to circular and each leg part 58 may be configured such that the cross section is quadrilateral or star-shaped. Preferably, the diameter of each leg part 58 is smaller than the diameter of the grip 55.

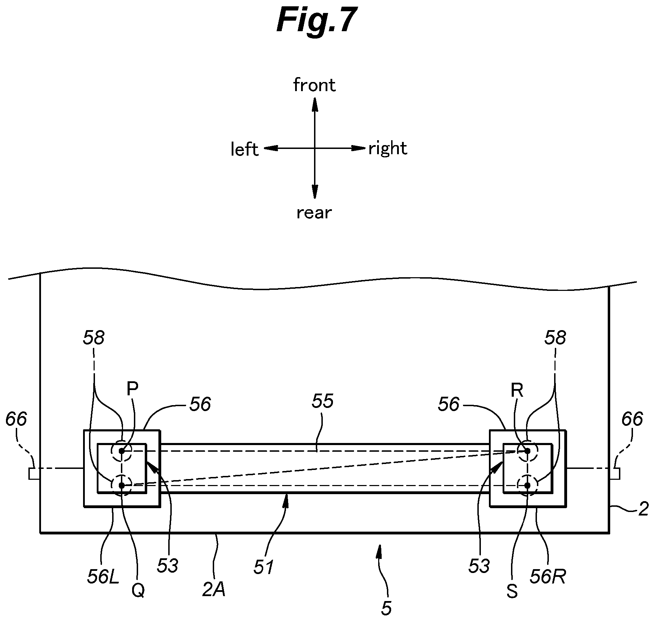

As shown in Figures 6 and 7, two of the four leg parts 58 are connected to the lower surface of the left block part 56L at the upper ends thereof (at the point P and the point Q in Figure 7) and are connected to the upper surface of the vehicle body 2 at the lower ends thereof. The remaining two leg parts 58 are connected to the lower surface of the right block part 56R at the upper ends thereof (at the point R and the point S in Figure 7) and are connected to the upper surface of the vehicle body 2 at the lower ends thereof.

The two leg parts 58 connecting the left block part 56L to the vehicle body 2 are arranged in the front-rear direction and the two leg parts 58 connecting the right block part 56R to the vehicle body 2 are also arranged in the front-rear direction. Thus, as seen in top view, the four leg parts 58 are provided at vertices of a rectangle and are arranged in a rectangular grid pattern.

Specifically, as shown in Figure 7, the leg parts 58 are respectively disposed in four positions constituting a rectangle as seen in top view. Therefore, as seen in top view, each leg part 58 is disposed in a position spaced (offset) from a straight line connecting selected two of the other leg parts 58.

The connection positions (the point P and the point Q) of the two leg parts 58 positioned on the left side with the left block part 56L and the connection position (the point R) of the one leg part 58 positioned on the front right side with the right block part 56R constitute the vertices of a triangle (triangle PQR) as seen in top view. Thus, the connection parts 52 are coupled to the handle 51 at three positions constituting the vertices of a triangle. Similarly, the connection positions (the point R and the point S) of the two leg parts 58 positioned on the right side with the right block part 56R and the connection position (the point Q) of the one leg part 58 positioned on the rear left side with the left block part 56L constitute the vertices of a triangle (triangle RSQ).

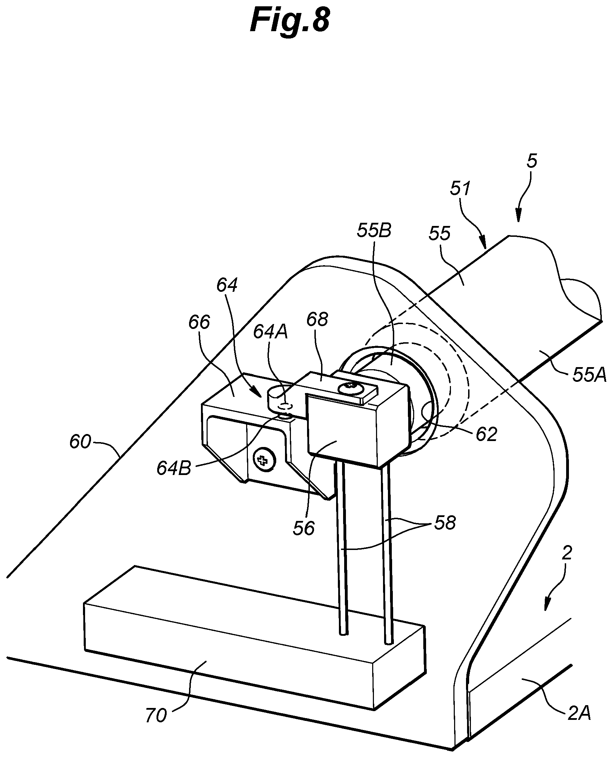

As shown in Figure 8, the rear portion 2A of the vehicle body 2 may be provided with one or more restricting members 60 for restricting the movement range of the handle 51 in the front-rear direction. In the present embodiment, the rear portion 2A of the vehicle body 2 is provided with a pair of left and right restricting members 60 which are disposed to be laterally spaced from each other. As shown in Figure 8, each of the restricting members 60 is provided with a through hole 62 through which the corresponding one of the left and right end portions of the handle 51 penetrates. With both the left and right end portions of the handle 51 inserted into the respective through holes 62, the movement range of the handle 51 in the front-rear and up-down directions is restricted. A minute gap is formed between the inner circumferential surface of each through hole 62 and the outer circumferential surface of the handle 51. The movement of the handle 51 in the front-rear direction is permitted within a range in which the outer circumferential surface of the handle 51 does not contact the inner circumferential surface of each through hole 62.

Note that in the present embodiment, the grip 55 includes a grip main body 55A having a cylindrical columnar and extending in the left-right direction and extension parts 55B each having a substantially cylindrical columnar shape and respectively protruding laterally outward from the left and right ends of the grip main body 55A. The diameter of each extension part 55B is smaller than the diameter of the grip main body 55A. The handle 51 is configured such that the extension parts 55B thereof penetrate through the corresponding through holes 62. The diameter of the through holes 62 is set to be greater than the diameter of the extension parts 55B and smaller than the diameter of the grip main body 55A. Thereby, when the handle 51 moves in the left-right direction, the left and right end surfaces of the grip main body 55A collide with the laterally inner side surfaces of the restricting members 60. Thus, the movement range of the handle 51 in the left-right direction can be limited.

Each of the detection units 53 detects an operation input of the user to the handle 51 and outputs the detection result to the control device 7. In the present embodiment, as shown in Figure 6, the operation device 5 is provided with a pair of left and right detection units 53 to simultaneously detect a translational displacement of the handle 51 in the front-rear and left-right directions and a rotational displacement of the handle 51 about a vertical axis which can be caused by the operation input of the user.

Each of the detection units 53 is composed of a displacement sensor 64. Each displacement sensor 64 detects a horizontal displacement amount of a corresponding one of laterally spaced positions of the handle 51.

For example, the displacement sensor 64 may be a laser displacement sensor using laser light or may be a Hall element displacement sensor using magnetism. Each displacement sensor 64 detects a horizontal displacement of a corresponding one of predetermined laterally spaced positions of the handle 51 with respect to the vehicle body 2. In the present embodiment, the left displacement sensor 64 detects the displacement amount of the left block part 56L in the front-rear and left-right directions, and the right displacement sensor 64 detects the displacement amount of the right block part 56R in the front-rear and left-right directions.

Each displacement sensor 64 is composed of a Hall element displacement sensor which includes a magnet 64A provided on the handle 51 and a Hall element 64B supported on the vehicle body 2 via a support member 66.

In the example shown in Figure 6, the support member 66 includes a main body 66A provided above the block part 56 and a support leg 66B connecting the main body 66A to the vehicle body 2. The magnet 64A is provided on the upper surface of the block part 56, and the Hall element 64B is provided on the lower surface of the main body 66A at a position opposing the magnet 64A.

Note, however, that the support structure of the displacement sensor 64 is not limited to this embodiment. As shown in Figure 8, the support member 66 may be joined to the laterally outer surface of the restricting member 60 at a position forward of the through hole 62 so that the support member 66 is joined to the vehicle body 2 via the restricting member 60.

In the example shown in Figure 8, the Hall element 64B is mounted to the upper surface of the support member 66. Each of the left and right end portions of the handle 51 is provided with an arm part 68 extending out to a position opposing the upper surface of the support member 66 in the up-down direction. The magnet 64A is mounted to the lower surface of the arm part 68 and thereby is disposed to oppose the Hall element 64B substantially in the up-down direction. In the example shown in Figure 8, each leg part 58 is joined the block part 56 at the upper end thereof and is fixed to the vehicle body 2 at the lower end thereof via a base 70 joined to the laterally outer surface of the restricting member 60.

Note that in the example shown in each of Figures 6 and 8, the Hall element 64B is provided on the vehicle body 2 side and the magnet 64A is provided on the handle 51 side, but the magnet 64A may be provided on the vehicle body 2 side and the Hall element 64B may be provided on the handle 51 side.

In response to the movement of the block part 56 in the front-rear and left-right directions, the position of the magnet 64A relative to the Hall element 64B changes, and accordingly, the magnetic field detected by the Hall element 64B changes. Namely, by detecting the change in the magnetic field with the Hall element 64B, the displacement amount of the handle 51 in the front-rear and left-right directions can be detected.

The control device 7 (see Figure 2) is provided inside the vehicle body 2. The control device 7 is an electronic control unit (ECU) including a processor such as a CPU, a non-volatile memory such as a ROM, a volatile memory such as a RAM, and so on. The control device 7 controls each omnidirectional wheel 3 by executing, with the processor, computational processing according to the program stored in the non-volatile memory. The control device 7 may be configured as one piece of hardware or may be configured as a unit including multiple pieces of hardware. Also, at least a part of the functional units of the control device 7 may be realized as hardware such as an LSI, an ASIC, and an FPGA, or may be realized as a combination of software and hardware.

The control device 7 is connected to the detection units 53, the electric motors 20, the electric current sensors 33, and the angular velocity sensors 34. The detection units 53, the electric current sensors 33, and the angular velocity sensors 34 output detection signals to the control device 7. The control device 7 outputs a control signal to each electric motor 20.

The control device 7 controls each electric motor 20 of each omnidirectional wheel 3 based on the signals from the detection units 53, the electric current sensors 33, and the angular velocity sensors 34.

When each detection unit 53 is composed of a displacement sensor 64, the control device 7 may preferably acquire a front-rear component of the load applied to the handle 51 by using an average xave of a displacement amount xL in the front-rear direction detected by the left displacement sensor 64 and a displacement amount xR in the front-rear direction detected by the right displacement sensor 64. At this time, the control device 7 may acquire the front-rear component fsx of the load applied to the handle 51 as k × xave, which is the average xave multiplied by a proportionality constant k.

At the same time, the control device 7 may preferably acquire a lateral component of the load applied to the handle 51 by using an average yave of a displacement amount yL in the left-right direction detected by the left displacement sensor 64 and a displacement amount yR in the left-right direction detected by the right displacement sensor 64. At this time, the control device 7 may acquire the lateral component fsy of the load applied to the handle 51 as k × yave, which is the average yave multiplied by a proportionality constant k.

Further, the control device 7 preferably acquires a moment applied to the handle 51 based on a difference Δx between the displacement amount xL in the front-rear direction detected by the left displacement sensor 64 and the displacement amount xR in the front-rear direction detected by the right displacement sensor 64. At this time, the control device 7 may acquire the moment mfs applied to the handle 51 as k × Δx, which is the difference Δx multiplied by a proportionality constant k'.

The control device 7 decides the front-rear velocity target value, the lateral velocity target value, and the yaw angular velocity target value of the moving body 1 based on the signals from the detection units 53. For example, the control device 7 decides the front-rear velocity target value of the moving body 1 based on the front-rear component fsx of the load applied to the handle 51, decides the lateral velocity target value of the moving body 1 based on the lateral component fsy of the load applied to the handle 51, and decides the yaw angular velocity target value of the moving body 1 based on the moment mfs applied to the handle 51.

Based on the decided target values, the control device 7 sets the angular velocity target value (rotation speed target value) of each electric motor 20 of each omnidirectional wheel 3. Preferably, the control device 7 sets the angular velocity target value of each electric motor 20 based on the front-rear velocity target value, the lateral velocity target value, and the yaw angular velocity target value by using a map which defines the relationship of the angular velocity target value of each electric motor 20 with the front-rear velocity target value, the lateral velocity target value, and the yaw angular velocity target value.

Thereby, when a load is applied to the handle 51 in the front-rear direction, the moving body 1 moves in the front-rear direction in accordance with the direction of the load, and when a load is applied to the handle 51 in the left-right direction, the moving body 1 moves in the left-right direction in accordance with the direction of the load. Also, when a moment about the vertical axis is applied to the handle 51, the moving body 1 turns about the vertical axis.

Next, the operation and effects of the operation device 5 configured as above will be described.

The handle 51 is connected to the vehicle body 2 via four leg parts 58. The leg parts 58 are disposed at four positions constituting a rectangle in top view. Therefore, compared to the case where the handle 51 is connected to the vehicle body 2 via two leg parts 58, for example, the handle 51 can be supported more stably on the vehicle body 2.

Each of the four leg parts 58 is disposed in a position deviated (offset) from a straight line connecting two of the other leg parts 58 (the connection positions of the leg parts 58 with the handle 51). Therefore, as seen in top view, the connection parts 52 are coupled to the handle 51 in at least three positions constituting the vertices of a triangle.

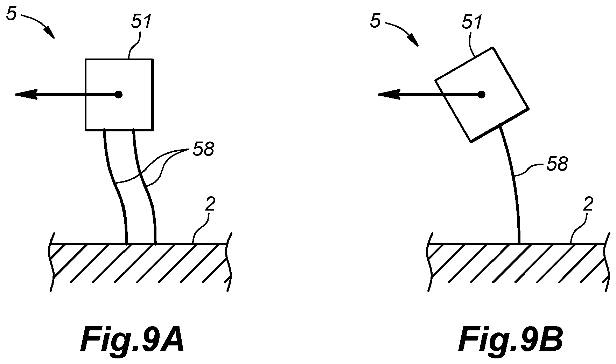

As shown in Figure 9A, when the user applies a forward load (see the arrow in Figure 9A) to the handle 51 and pushes the handle 51 forward, a front portion of the handle 51 may be pushed down so that a moment urging the handle 51 to rotate about a straight line connecting the point Q and the point S shown in Figure 7 may be added to the handle 51. At this time, the leg parts 58 at positions deviated from the straight line QS in top view (the two leg parts 58 positioned at front left and right) resist the descent of the front portion of the handle 51 due to the load from the user, and function to prohibit the rotation of the handle 51 about the horizontal axis. Similarly, when a load is applied to pull up the front portion of the handle 51 also, the two leg parts 58 positioned at front left and right resist the ascent of the front portion of the handle 51 and function to prohibit the rotation of the handle 51 about the horizontal axis.

In this way, when a moment about a straight line connecting the connection positions of the two leg parts 58 with the handle 51 is applied to the handle 51, the leg parts 58 at positions deviated from the straight line function to prohibit the rotation of the handle 51. Therefore, as shown in Figure 9A, the handle 51 becomes hard to rotate about an axis extending in the horizontal direction and a change of the direction of the upper surface of the handle 51 is suppressed.

In contrast, in a case where the handle 51 is connected to the vehicle body 2 by only a pair of left and right plate members or a pair of left and right leg parts 58 arranged along a straight line in top view, as shown in Figure 9B, when the user applies a forward load (see the arrow in Figure 9B) to the handle 51 and pushes the handle 51 forward, the handle 51 rotates about an axis extending laterally to pass the coupling parts of the leg parts 58 to the vehicle body 2. Therefore, the direction of the upper surface of the handle 51 changes more significantly compared to the case shown in Figure 9A.

As described above, in the operation device 5, when a forward load is applied to the handle 51, a change of the direction of the upper surface of the handle 51 is suppressed. Similarly, when a rearward or lateral load is applied to the handle 51 also, the leg parts 58 connected to the handle 51 at positions deviated from a rotation axis extending in the horizontal direction function to resist the moment acting on the handle 51 about the rotation axis, and thus, a change of the direction of the upper surface of the handle 51 is suppressed.

Since the rotation of the upper surface of the handle 51 is suppressed during the operation input, the operation device 5 can give the user a natural operation feeling and can allow the user to perform an operation input suitable for the moving body 1 configured to move on a horizontal plane. Further, since the handle 51 moves while substantially keeping the direction of the upper surface (or the lower surface) thereof, a displacement of the handle 51 in the horizontal direction can be favorably detected when the magnet 64A is mounted to the upper surface (or the lower surface) of the handle 51 and the Hall element 64B is mounted to the vehicle body 2.

Since each leg part 58 is composed of a round rod, it is easy to make the leg part 58 have uniform stiffness in any horizontal direction compared to the case where each leg part 58 is composed of a plate member. In addition, since each leg part 58 can be bent substantially evenly in any horizontal direction, a change of the direction of the upper surface of the handle 51 can be favorably suppressed. Also, since each leg part 58 is composed of a round rod, the operation device 5 can be configured compactly, and further, the configuration is simple.

Further, since the operation device 5 is provided with two displacement sensors 64 at laterally spaced positions and each of the displacement sensors 64 is configured to detect a horizontal displacement amount of a corresponding one of laterally spaced positions of the handle 51, a moment applied to the handle 51 about the vertical axis can be detected. Thereby, it is possible to properly detect an operation input of the user for turning the moving body 1.

### Second Embodiment

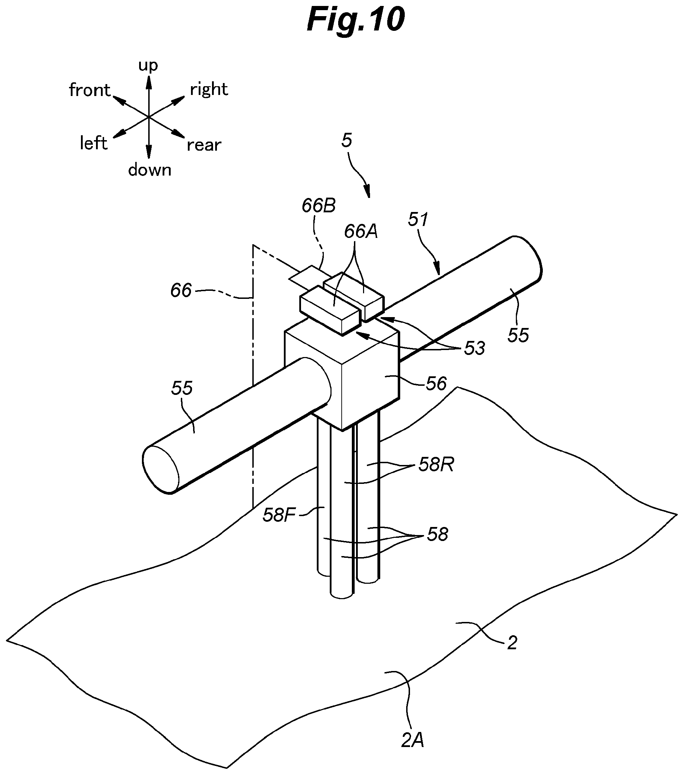

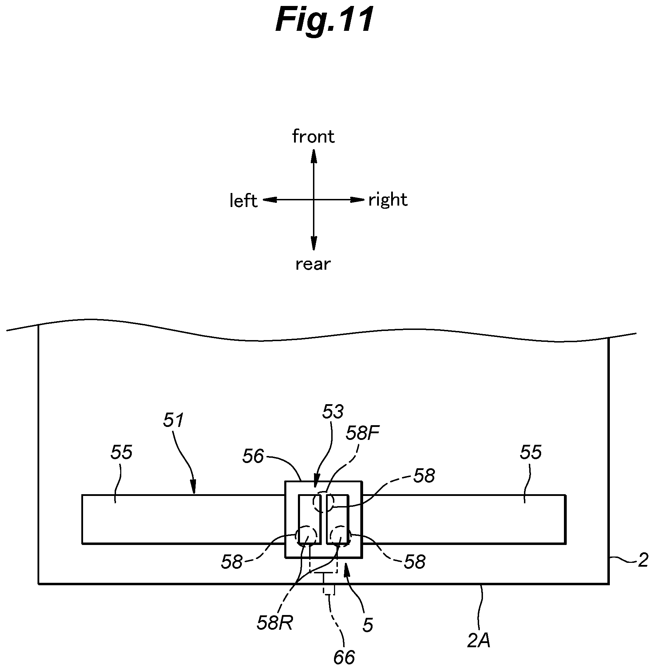

As shown in Figures 10 and 11, the operation device 5 according to the second embodiment differs from the first embodiment with respect to the shape of the handle 51, the number and the shape of the connection parts 52, and the positions of the displacement sensors 64, and the other configuration is the same as in the first embodiment. Thus, description will be omitted for the same configuration as in the first embodiment.

As shown in Figure 10, the handle 51 of the second embodiment includes a block part 56 and a pair of left and right grips 55 provided on the left and right side surfaces of the block part 56. As in the first embodiment, the block part 56 has a substantially rectangular parallelepiped shape having surfaces facing forward, rearward, upward, downward, leftward, and rightward. The grips 55 each have a round rod shape and extend out left and right from the left and right side surfaces of the block part 56, respectively.

As shown in Figure 11, the connection part 52 includes a pair of left and right leg parts 58 (hereinafter, the rear leg parts 58R) disposed to be laterally spaced from each other and a single leg part 58 (hereinafter, the front leg part 58F) disposed in front of the pair of left and right rear leg parts 58R. Similarly to the leg parts 58 of the first embodiment, the rear leg parts 58R and the front leg part 58F each extend in the up-down direction and have a round rod shape with a circular cross section. Note, however, that the shape of the rear leg parts 58R and the front leg part 58F is not limited to this embodiment. The shape of the cross section of the rear leg parts 58R and the front leg part 58F is not limited to circular, they may be configured to have a quadrilateral or star-shaped cross section. Note that the diameter of each of the rear leg parts 58R and the front leg part 58F is preferably smaller than the diameter of the grip 55.

As shown in Figure 10, similarly to the leg parts 58 of the first embodiment, each of the rear leg parts 58R and the front leg part 58F extends in the up-down direction, is connected to the lower surface of the block part 56 at the upper end thereof, and is connected to the upper surface of the vehicle body 2 at the lower end thereof.

As shown in Figure 11, the rear leg parts 58R and the front leg part 58F are disposed to form a triangle in top view. Therefore, the connection part 52 is coupled to the handle 51 and the vehicle body 2 at three positions constituting the vertices of a triangle in top view. Consequently, as seen in top view, one leg part 58 of the three leg parts 58 is disposed at a position deviated (offset) from a line connecting the remaining two leg parts 58.

The front leg part 58F is disposed between the two rear leg parts 58R as seen in the front-rear direction. Thus, the leg parts 58 are respectively disposed at the positions of the vertices of an isosceles triangle as seen in top view. In top view, the distance between the front leg part 58F and the left or right rear leg part 58R may be longer than or equal to the distance between the left and right rear leg parts 58R.

Next, the operation and the effects of the operation device 5 configured as above will be described.

As in the first embodiment, in the second embodiment also, one of the three leg parts 58 is disposed in a position deviated (offset) from a straight line connecting the connection positions of the other two leg parts 58 with the handle 51. Therefore, as in the first embodiment, when a moment about a straight line connecting the connection positions of two leg parts 58 with the handle 51 is applied to the handle 51, the leg part 58 at a position deviated from the straight line resists the moment and functions to prohibit the rotation of the handle 51, whereby a change of the direction of the upper surface of the handle 51 is suppressed.

As described above, since the rotation of the upper surface of the handle 51 is suppressed during the operation input, the operation device 5 can give the user a natural operation feeling. Also, since the handle 51 moves while substantially keeping the direction of the upper surface (or the lower surface) thereof, a displacement the handle 51 in the horizontal direction can be favorably detected when the magnet 64A is mounted to the upper surface (or the lower surface) of the handle 51 and the Hall element 64B is mounted to the vehicle body 2.

In the present embodiment, the operation device 5 has three leg parts 58. Therefore, compared to the case where the operation device 5 is provided with four leg parts 58 as in the first embodiment, the configuration of the operation device 5 is simple and the cost required for the manufacture the operation device 5 can be reduced.

The front leg part 58F is disposed between the two rear leg parts 58R as seen in the front-rear direction. Therefore, compared to the case where the front leg part 58F is provided on the laterally outer side of the two rear leg parts 58R as seen in the front-rear direction, the lateral width of the connection part 52 is reduced, whereby the configuration of the connection part 52 can be made compact.

Further, as in the first embodiment, each leg part 58 is composed of a round rod. Therefore, it is easy to make the leg part 58 have uniform stiffness in any horizontal direction, and the leg part 58 can be bent substantially evenly in any horizontal direction.

Concrete embodiments of the present invention have been described in the foregoing, but the present invention can be modified in various ways without being limited by the above embodiments.

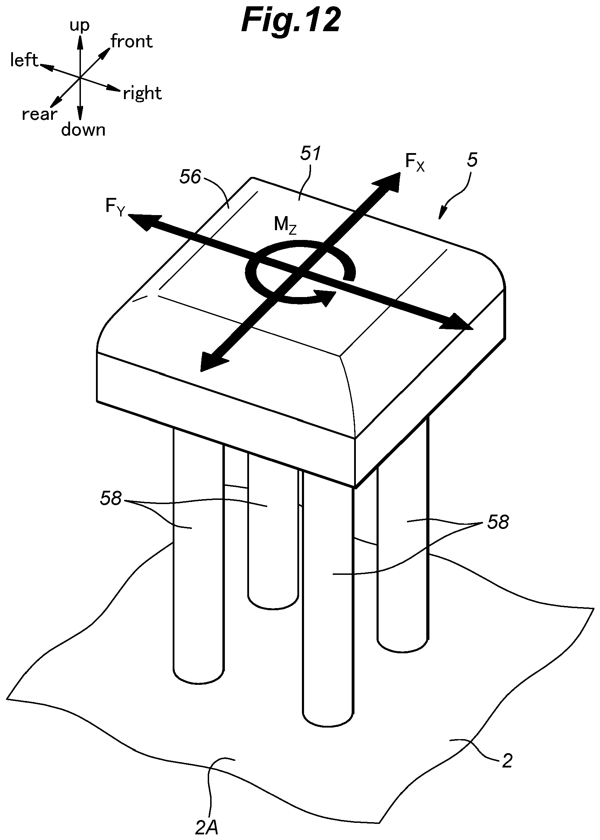

In the above embodiment, the handle 51 was configured to have a rod shape extending in the left-right direction, but the shape of the handle 51 is not limited to this embodiment. For example, as shown in Figure 12, the handle 51 may be provided with only a block part 56 having a substantially square plate shape as seen in top view. In this way, the handle 51 is composed of only the block part 56, and thus, the user can operate the moving body 1 by grasping the handle 51 with one hand. Figure 12 shows an example in which the block part 56 and the vehicle body 2 are connected by four leg parts 58 arranged in a square. Note, however, that the operation device 5 may be provided with three leg parts 58 or may be provided with five or more leg parts 58.

In this case also, a detection unit 53 for detecting an operation input to the block part 56 is provided between the block part 56 and the vehicle body 2. As in the first embodiment, the detection unit 53 may be composed of two displacement sensors 64 disposed symmetrically about the central axis of the block part 56. Thereby, based on the displacement amount detected by the displacement sensor 64, a load F_{X} in the front-rear direction, a load Fy in the left-right direction, and a moment M_{Z} about the central axis applied to the block part 56 can be acquired.

Also, in the above embodiment, an example in which the displacement sensor 64 was composed of a Hall element displacement sensor was described, but the displacement sensor 64 may be composed of another sensor. The displacement sensor 64 may be composed of a noncontact sensor such as a laser sensor, a capacitive sensor, an LED distance sensor, or an ultrasonic sensor, or may be composed of a contact sensor provided with a contact.

## Claims

1. An operation device (5) for receiving an operation input regarding translation and/or turning about a vertical axis of a moving body (1) from a user operating the moving body (1), the operation device (5) comprising:
leg parts (58) extending upward from a vehicle body (2):
an operation part (51) joined to each of the leg parts (58) and configured to receive an operation input from the user; and
at least one displacement sensor (64) configured to detect a horizontal displacement amount of the operation part (51), **characterized in that** said leg parts (58) comprise at least three leg parts (58),
wherein, as seen in top view, each of the leg parts (58) is in a position spaced from a straight line connecting selected two of other leg parts (58).

2. The operation device (5) according to claim 1, wherein the at least three leg parts (58) include four leg parts (58) disposed at vertices of a rectangle as seen in top view.

3. The operation device (5) according to claim 2, wherein each of the leg parts (58) has a round rod shape.

4. The operation device (5) according to claim 1, wherein the at least three leg parts (58) include three leg parts (58) disposed at vertices of a triangle as seen in top view.

5. The operation device (5) according to claim 4, wherein the three leg parts (58) consist of two leg parts (58) disposed to be laterally spaced from each other and one leg part (58) disposed in front of the two leg parts (58).

6. The operation device (5) according to claim 5, wherein the one leg part (58) disposed in front of the two leg parts (58) is disposed between the two leg parts (58) as seen in a front-rear direction.

7. The operation device (5) according to claim 6, wherein each of the leg parts (58) has a round rod shape.

8. The operation device (5) according to any one of claims 1 to 7, wherein the at least one displacement sensor (64) includes two displacement sensors (64),
each of the two displacement sensors (64) being configured to detect a horizontal displacement amount of a corresponding one of laterally spaced positions of the operation part (51).

9. The operation device (5) according to any one of claims 1 to 7, comprising two restricting members (60) supported on the vehicle body (2) and provided with respective through holes (62) for allowing left and right end portions of the operation part (51) to pass therethrough in a left-right direction.

## Patentansprüche

1. Betriebsvorrichtung (5) zum Empfangen einer Betriebseingabe, welche auf eine Übertragung und/oder ein Drehen um eine vertikale Achse eines sich bewegenden Körpers (1) bezogen ist, von einem Nutzer, welcher den sich bewegenden Körper (1) betreibt, wobei die Betriebsvorrichtung (5) umfasst:
Beinteile (58), welche sich von einem Fahrzeugkörper (2) nach oben erstrecken;
einen Betriebsteil (51), welcher mit jedem der Beinteile (58) verbunden ist und dazu eingerichtet ist, eine Betriebseingabe von dem Nutzer zu empfangen; und
wenigstens einen Verlagerungssensor (64), welcher dazu eingerichtet ist, einen horizontalen Verlagerungsbetrag des Betriebsteils (51) zu detektieren, **dadurch gekennzeichnet, dass** die Beinteile (58) wenigstens drei Beinteile (58) umfassen,
wobei, in einer Draufsicht betrachtet, jeder der Beinteile (58) in einer Position ist, welche von einer geraden Linie beabstandet ist, welche zwei ausgewählte der anderen Beinteile (58) verbindet.

2. Betriebsvorrichtung (5) nach Anspruch 1, wobei die wenigstens drei Beinteile (58) vier Beinteile (58) umfassen, welche in einer Draufsicht betrachtet an Eckpunkten eines Rechtecks angeordnet sind.

3. Betriebsvorrichtung (5) nach Anspruch 2, wobei jeder der Beinteile (58) eine runde Stangenform aufweist.

4. Betriebsvorrichtung (5) nach Anspruch 1, wobei die wenigstens drei Beinteile (58) drei Beinteile (58) umfassen, welche in einer Draufsicht betrachtet an Eckpunkten eines Dreiecks angeordnet sind.

5. Betriebsvorrichtung (5) nach Anspruch 4, wobei die drei Beinteile (58) aus zwei Beinteilen (58), welche angeordnet sind, um lateral voneinander beabstandet zu sein, und einem Beinteil (58) bestehen, welcher vor den zwei Beinteilen (58) angeordnet ist.

6. Betriebsvorrichtung (5) nach Anspruch 5, wobei der eine Beinteil (58), welcher vor den zwei Beinteilen (58) angeordnet ist, in einer Vorne-Hinten-Richtung betrachtet zwischen den zwei Beinteilen (58) angeordnet ist.

7. Betriebsvorrichtung (5) nach Anspruch 6, wobei jeder der Beinteile (58) eine runde Stangenform aufweist.

8. Betriebsvorrichtung (5) nach einem der Ansprüche 1 bis 7, wobei der wenigstens eine Verlagerungssensor (64) zwei Verlagerungssensoren (64) umfasst,
wobei jeder der zwei Verlagerungssensoren (64) dazu eingerichtet ist, einen horizontalen Verlagerungsbetrag einer entsprechenden aus lateral beabstandeten Positionen des Betriebsteils (51) zu detektieren.

9. Betriebsvorrichtung (5) nach einem der Ansprüche 1 bis 7, umfassend zwei Beschränkungselemente (60), welche an dem Fahrzeugkörper (2) gehaltert sind und mit jeweiligen Durchgangslöchern (62) bereitgestellt sind, um es einem linken und einem rechten Endabschnitt des Betriebsteils (51) zu ermöglichen, in einer Links-Rechts-Richtung dadurch zu verlaufen.

## Revendications

1. Dispositif de fonctionnement (5) pour recevoir une entrée de fonctionnement concernant une translation et/ou une rotation autour d'un axe vertical d'un corps mobile (1) depuis un utilisateur actionnant le corps mobile (1), le dispositif de fonctionnement (5) comportant :
des parties de jambe (58) s'étendant vers le haut à partir d'une carrosserie de véhicule (2) :
une pièce de fonctionnement (51) reliée à chacune des parties de jambe (58) et configurée pour recevoir une entrée de fonctionnement de l'utilisateur ; et
au moins un capteur de déplacement (64) configuré pour détecter une quantité de déplacement horizontal de la pièce de fonctionnement (51), **caractérisé en ce que** lesdites parties de jambe (58) comportent au moins trois parties de jambe (58),
dans lequel, en vue de dessus, chacune des parties de jambe (58) est dans une position espacée d'une ligne droite reliant deux autres parties de jambe (58) sélectionnées.

2. Dispositif de fonctionnement (5) selon la revendication 1, dans lequel les au moins trois parties de jambe (58) incluent quatre parties de jambe (58) disposées à des sommets d'un rectangle en vue de dessus.

3. Dispositif de fonctionnement (5) selon la revendication 2, dans lequel chacune des parties de jambe (58) présente une forme de tige ronde.

4. Dispositif de fonctionnement (5) selon la revendication 1, dans lequel les au moins trois parties de jambe (58) incluent trois parties de jambe (58) disposées aux sommets d'un triangle en vue de dessus.

5. Dispositif de fonctionnement (5) selon la revendication 4, dans lequel les trois parties de jambe (58) sont constituées de deux parties de jambe (58) disposées pour être espacées latéralement l'une de l'autre et d'une partie de jambe (58) disposée devant les deux parties de jambe (58).

6. Dispositif de fonctionnement (5) selon la revendication 5, dans lequel la partie de jambe (58) disposée devant les deux parties de jambe (58) est disposée entre les deux parties de jambe (58) en vue dans une direction avant-arrière.

7. Dispositif de fonctionnement (5) selon la revendication 6, dans lequel chacune des parties de jambe (58) présente une forme de tige ronde.

8. Dispositif de fonctionnement (5) selon l'une quelconque des revendications 1 à 7, dans lequel l'au moins un capteur de déplacement (64) inclut deux capteurs de déplacement (64), chacun des deux capteurs de déplacement (64) étant configuré pour détecter une quantité de déplacement horizontal d'une correspondante de positions espacées latéralement de la pièce de fonctionnement (51).

9. Dispositif de fonctionnement (5) selon l'une quelconque des revendications 1 à 7, comportant deux organes restricteurs (60) supportés sur la carrosserie de véhicule (2) et pourvus de trous traversants (62) respectifs pour permettre le passage de parties d'extrémité gauche et droite de la pièce de fonctionnement (51) dans une direction gauche-droite.
